# FASCICULE DE BREVET EUROPEEN

(11) **EP 0 357 483 B1**
(45) Date de publication et mention de la délivrance du brevet: **07.01.1993**
(21) Numéro de dépôt: 89402237.5
(22) Date de dépôt: 08.08.1989
(51) Int. Cl.: H04N 5/268, H04Q 3/00, H04H 7/00

(54) **Grille de commutation**
Kommutierungs-Koppelfeld
Switching matrix

(30) Priorité: 12.08.1988 FR 8810875
(43) Date de publication de la demande: 07.03.1990
(73) Titulaire: THOMSON VIDEO EQUIPEMENT, 95800 Cergy-Saint-Christophe (FR)
(72) Inventeur: Fedorczak, Christian, F-92045 Paris la Défense (FR); Stollsteiner, Philippe, F-92045 Paris la Défense (FR)
(74) Mandataire: Courtellemont, Alain

(56) Documents cités:
- EP-A- 0 058 446
- WO-A-86/05939

## Description

L'invention se rapporte au domaine de la transmission de signaux, et plus particulièrement aux grilles de commutation permettant de transmettre sur les y sorties de la grille au plus y signaux choisis parmi ceux appliqués sur les x entrées de cette grille.

Classiquement pour la commutation des signaux vidéo, on utilise un ensemble de matrices élémentaires ayant chacune n entrées et y sorties pour réaliser une matrice plus grande à x entrées, x étant supérieur à n, et y sorties, ces matrices élémentaires étant connectées en parallèle. Pour cela, les sorties des différentes matrices élémentaires sont couplées aux sorties de la matrice par l'intermédiaire d'un circuit de couplage.

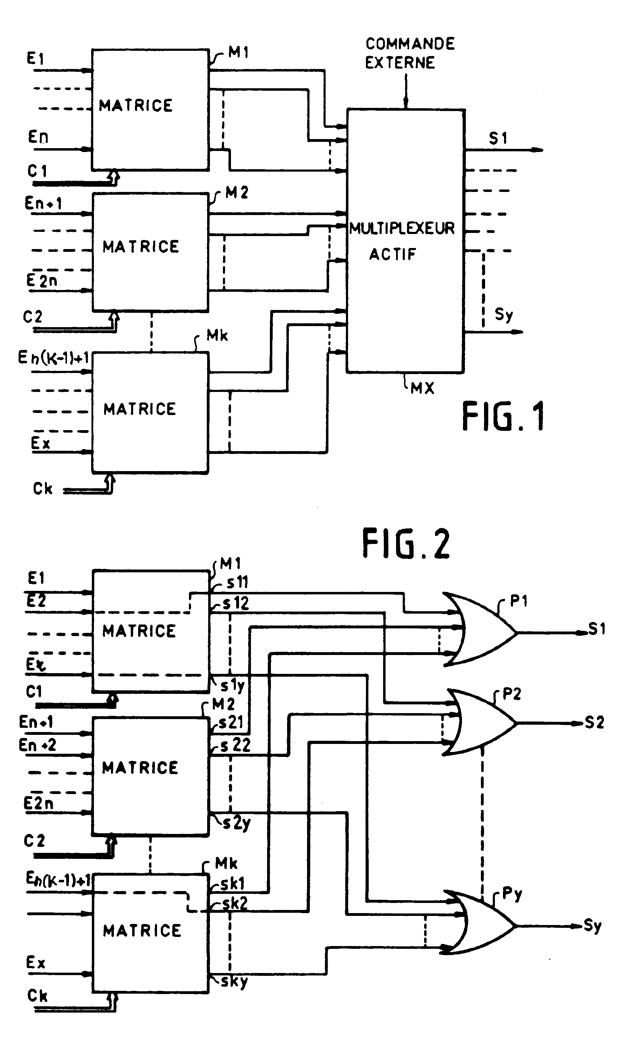

Une grille de commutation selon l'art antérieur représentée sur la figure 1 comporte un ensemble de matrices de connexion élémentaires, M₁, M₂...Mₖ en parallèle, ayant chacune n entrées et y sorties, y pouvant être égal à n. Ces entrées notées E₁...Eₙ sont couplées aux sorties par des points de croisement dans la matrice élémentaire M₁ dont la sélection est effectuée par une commande extérieure C₁. De même pour la matrice M₂ les entrées Eₙ₊₁...E₂ₙ sont couplées aux y sorties par l'intermédiaire des points de croisement sur commande extérieure C₂ etc..., et la matrice Mₖ permet de connecter des entrées E_{n(K-1)+1}...Eₓ aux y sorties par l'intermédiaire des points de croisement sur commande extérieure Cₖ. Les sorties des matrices élémentaires M₁, M₂,...Mₖ sont reliées aux entrées d'un multiplexeur actif ayant k . y entrées et y sorties par exemple. Sur commande externe appliquée à ce multiplexeur actif (on entend par multiplexeur actif un organe recevant une commande logique, par opposition à la notion de multiplexeur passif évoquée plus loin), y parmi les y . k entrées du multiplexeur sont sélectionnées pour transmission sur les sorties S₁...S_{y} du multiplexeur actif.

Par hypothèse, dans une telle grille de commutation, toutes les entrées sont actives, et les connexions dans les matrices ou dans le circuit de couplage sont effectuées suivant des ordres de commande provenant de circuits extérieurs, tant au niveau des matrices qu'au niveau des circuits de couplage réalisés par multiplexage actif. De fait, le multiplexeur actif constitue un deuxième étage de sélection et se comporte comme une matrice élémentaire.

L'utilisation d'un tel couplage actif entraîne deux inconvénients qui rendent très difficile la réalisation de grilles de commutation de grandes dimensions :
- tout d'abord il existe une forte diaphotie du fait de la présence de signaux dans tous les éléments de liaison et de multiplexage (la diaphotie est la mesure de la perturbation engendrée sur une sortie par les signaux appliqués sur les entrées non sélectionnées). L'influence de ce phénomène augmente avec le nombre de matrices élémentaires et la longueur des interconnexions ;
- la complexité de la commande qui doit prendre en compte deux niveaux de sélection pour réaliser la connexion de chaque couple entrée-sortie : la connexion d'une entrée E de l'une des matrices à une sortie S du multiplexeur actif nécessite la combinaison de deux commandes, l'une appliquée à la matrice ayant parmi ses entrées l'entrée correspondante, et l'autre appliquée au multiplexeur pour la sortie nécessaire, qui doit donc tenir compte de la commande précédente.

Les liaisons vidéo actuelles, par exemple dans le cas des connexions par fibres optiques, utilisent de plus en plus des signaux en modulation de fréquence écrêtés, c'est-à-dire ayant l'apparence de signaux à deux états à rapport cyclique variable. Ces signaux dits "PFM" ou "SPFM" (Pulse Frequency Modulation ou Square Pulse Frequency Modulation) peuvent permettre d'utiliser un principe de commutation complètement différent de ce qui était utilisé jusqu'à présent.

L'invention propose une grille de commutation permettant d'éviter ces inconvénients et particulièrement applicable à des signaux numériques ou pseudo-numériques notamment aux signaux vidéo "PFM" (Pulse Frequency Modulation) ou "SPFM" (Square Pulse Frequency Modulation).

Selon l'invention une grille de commutation pour au plus x signaux à transmettre sur l'une de y sorties, comportant k matrices de connexions élémentaires ayant chacune n entrées, x étant au plus égal à kn, est caractérisée en ce que, les signaux à transmettre étant des signaux modulés en fréquence transmis sur deux niveaux, la grille de commutation comporte un circuit de couplage entièrement passif (on entend par passif "dépourvu de logique de commande) entre les sorties des matrices et les y sorties de la grille, utilisant des circuits logiques, la commande de la grille étant effectuée seulement par commande des matrices élémentaires. L'invention sera mieux comprise et d'autres caractéristiques apparaîtront à l'aide de la description qui suit en référence aux figures annexées.
- La figure 1 est le schéma synoptique d'une grille de commutation selon l'art antérieur ;
- La figure 2 est le schéma d'une grille de commutation suivant l'invention.

Suivant l'invention, au lieu de sélectionner une entrée parmi un ensemble d'entrées toutes actives d'un circuit de couplage actif, il est prévu d'utiliser des circuits de sélection à base de circuits logiques OU, pour peu que, dans l'ensemble des entrées de chacun de ces circuits, une seule entrée soit active à la fois. La figure 2 illustre ce nouveau principe de couplage, entièrement passif. On retrouve sur cette figure les mêmes matrices de connexion élémentaires M₁, M₂,...Mₖ avec chacune leurs entrées E₁...Eₙ pour la première, Eₙ₊₁...E₂ₙ pour la seconde, E_{n(K-1)}...Eₓ pour la dernière. Mais les sorties de ces matrices élémentaires sont reliées à un ensemble de circuits logiques OU, P₁, P₂...P_{y}, un circuit logique OU étant prévu pour chacune des sorties de la grille de commutation, S₁, S₂...S_{y}.

La connexion entre les matrices élémentaires et les circuits logiques OU est effectuée de la manière suivant : une sortie de chacune des matrices est reliée à chacun des circuits logiques OU. Pour simplifier on a représenté sur la figure 2 un système dans lequel les sorties de mêmes rangs des différentes matrices sont reliées à un même circuit logique OU ayant le rang correspondant : les sorties de rang 1 de chacune des matrices, respectivement s₁₁, s₂₁...sₖ₁ sont reliées au circuit logique OU P₁, les sorties de second rang de ces différentes matrices, respectivement s₁₂, s₂₂, sₖ₂ sont reliées au circuit logique à porte P₂ etc..., les sorties de rang y des différentes matrices respectivement s_{1y}, s_{2y}, ...s_{ky} sont reliées au entrée du circuit logique OU P_{y}.

Ces circuits logiques OU sont entièrement passifs : il n'y a pas de commande à cet étage du circuit de sélection ; l'ensemble des commandes est appliqué seulement aux matrices élémentaires de la façon suivante : comme indiqué ci-dessus chaque circuit logique à porte OU ne peut avoir qu'une entrée active à la fois. Pour qu'une entrée soit reliée à la sortie de l'un des circuits à porte, soit par exemple Eₙ à relier à la sortie S_{y}, toutes les sorties des différentes matrices reliées aux entrées de P_{y} sont non actives, c'est-à-dire mises en niveau 0 par commande convenable des différentes matrices, à l'exception de la sortie de la matrice M₁ dont le point de croisement (n, y) est validé. De la même manière on a représenté sur la figure un chemin actif en pointillés entre l'entrée E₂ et la sortie S₁ par validation dans la matrice M₁ du point de croisement (2,1), toutes les autres entrées de P₁ reliées aux sorties correspondantes des matrices Mᵢ étant non actives, c'est-à-dire mises au niveau 0. De même, on a supposé que l'entrée E_{n(K-1)+1} devait être reliée à la sortie S₂ pour cela seule la dernière entrée de P₂ est active, les autres entrées reliées aux sorties correspondantes des matrices Mᵢ étant non actives, c'est-à-dire mises au potentiel 0 ; le point de croisement (n(K-1)+1,2) de la matrice Mₖ étant validé.

Pour que ces entrées correspondantes des circuits logiques OU soient non actives, plusieurs solutions sont possibles. Dans un mode de réalisation de l'invention, une des entrées de chacune des matrices de connexion élémentaire est mise au potentiel neutre, c'est-à-dire au niveau 0, les points de croisement entre cette entrée et les sorties correspondantes étant validés pour que ce potentiel neutre soit appliqué aux entrées non actives des circuits logiques à porte.

Dans un autre mode de réalisation, si une ligne de potentiel neutre est prévue à l'intérieur de chacune des matrices de connexion élémentaires, les signaux de commande permettront d'appliquer ce potentiel neutre aux points de croisement correspondant aux entrées des portes qu'on souhaite inactives. Ainsi, le nombre des entrées de chacun des circuits logiques OU est égal au nombre de matrices de connexion élémentaires de l'étage précédent.

Il ressort de la description ci-dessus qu'une telle structure ne nécessite aucune commande au niveau de l'étage de couplage de sortie. De plus il permet une amélioration très sensible de la diaphotie, notamment pour les matrices de grandes tailles, c'est-à-dire ayant un grand nombre d'entrée et/ou un grand nombre de sorties.

Ce type de structure s'applique notamment aux systèmes de reportage vidéo dans lesquels un grand nombre de caméras doivent être connectées sur commande à un certain nombre d'enregistreurs-lecteurs magnétiques, mais n'est pas limitée à ce type d'application. De plus le mode de réalisation représenté succinctement sur la figure 2 illustre le cas où l'on a deux étages de sélection, mais l'invention s'applique également à un système qui nécessiterait plus de deux étages de sélection.

## Revendications

1. Grille de commutation pour au plus x signaux à transmettre sur l'une de y sorties, comportant k matrices de connexions élémentaires (M₁...Mₖ) ayant chacune n entrées, x étant au plus égal à kn, caractérisée en ce que, les signaux à transmettre étant des signaux modulés en fréquence transmis sur deux niveaux, la grille de commutation comporte un circuit de couplage entièrement passif entre les sorties des matrices et les y sorties de la grille, utilisant des circuits logiques (P₁, P₂...P_{y}), la commande de la grille étant effectuée seulement par commande des matrices élémentaires.

2. Grille de commutation selon la revendication 1, caractérisée en ce que le circuit de couplage comporte des circuits logiques à portes OU, à plusieurs entrées reliées à des sorties correspondantes des matrices, une seule entrée de chaque porte logique étant active, les autres étant inactives, les matrices de connexion étant commandées à cet effet.

3. Grille de commutation selon la revendication 2, caractérisée en ce que, pour qu'une seule entrée de chaque porte logique soit active à la fois, les sorties de même rang j des différentes matrices sont couplées aux entrées successives d'une même porte logique Pⱼ, la sortie Sⱼ de cette porte Pⱼ recevant le signal présent sur l'entrée choisie Eⱼ par validation du point de croisement de la matrice correspondante reliant cette entrée Eⱼ à la sortie de la même matrice reliée à la porte logique correspondante Pⱼ, les autres entrées de la même porte Pⱼ étant reliées à des points de croisement dans les autres matrices portés à un point de potentiel neutre.

4. Grille de commutation selon la revendication 3, caractérisée en ce qu'une entrée de chaque matrice est portée au point de potentiel neutre, les entrées non actives des portes logiques étant portées au point de potentiel neutre par validation des points de croisement reliant dans chaque matrice les sorties correspondantes à cette entrée au potentiel neutre.

5. Grille de commutation selon la revendication 3, caractérisée en ce que chaque matrice comporte une ligne de potentiel neutre à laquelle sont reliés, à défaut d'avoir été sélectionnés, les points de croisement de la matrice de façon que les sorties correspondantes soient non actives.

## Patentansprüche

1. Schaltfeld für höchstens x auf einen von y Ausgängen zu übertragende Signale, das k Elementarschaltmatrizen (M₁ ... Mₖ) mit je n Eingängen besitzt, wobei x höchstens gleich k . n ist, dadurch gekennzeichnet, daß für die Übertragung von Signalen, die als frequenzmodulierte Signale mit zwei Pegeln übertragen werden, das Schaltfeld einen vollständig passiven Koppelkreis zwischen den Ausgängen der Matrizen und den y Ausgängen des Schaltfeldes enthält, der logische Kreise (P₁, P₂, ... P_{y}) verwendet, wobei die Steuerung des Schaltfelds allein über die Steuerung der Elementarmatrizen erfolgt.

2. Schaltfeld nach Anspruch 1, dadurch gekennzeichnet, daß der Koppelkreis logische ODER-Tore mit mehreren Eingängen aufweist, die an entsprechende Ausgänge der Matrizen angeschlossen sind, wobei jeweils nur ein Eingang jedes logischen Tors aktiv ist und die anderen inaktiv sind und wobei die Schaltmatrizen dementsprechend gesteuert werden.

3. Schaltfeld nach Anspruch 2, dadurch gekennzeichnet, daß zur Aktivierung jeweils nur eines Eingangs jedes logischen Tors die Ausgänge j gleichen Rangs der verschiedenen Matrizen an die aufeinanderfolgenden Eingänge eines gleichen logischen Tors Pⱼ gekoppelt sind und der Ausgang Sⱼ dieses Tors Pⱼ das am ausgewählten Eingang Eⱼ vorliegende Signal aufgrund einer Durchschaltung des Kreuzungspunkts der entsprechenden, diesen Eingang Eⱼ an den zum entsprechenden logischen Tor Pⱼ führenden Ausgang derselben Matrix angeschlossen ist, während alle anderen Eingänge dieses Tors Pⱼ an ein neutrales Potential führende Kreuzungspunkte in den anderen Matrizen angeschlossen sind.

4. Schaltfeld nach Anspruch 3, dadurch gekennzeichnet, daß ein Eingang jeder Matrix auf neutralem Potential liegt und die nicht aktiven Eingänge der logischen Tore aufgrund einer Durchschaltung derjenigen Kreuzungspunkte auf das neutrale Potential gebracht werden, die in jeder Matrix die entsprechenden Ausgänge mit diesem auf neutralem Potential liegenden Eingang verbinden.

5. Schaltfeld nach Anspruch 3, dadurch gekennzeichnet, daß jede Matrix eine Leitung mit neutralem Potential besitzt, an die die nicht ausgewählten Kreuzungspunkte der Matrix angeschlossen sind, so daß die entsprechenden Ausgänge nicht aktiv sind.

## Claims

1. Switching grid for not more than x signals to be transmitted at one of y outputs, comprising k matrices of elementary connections (M₁...Mₖ) each having n inputs, x being at most equal to kn, characterised in that, the signals to be transmitted being frequency-modulated signals transmitted at two levels, the switching grid comprises a completely passive coupling circuit between the outputs of the matrices and the y outputs of the grid, using logic circuits (P₁, P₂...P_{y}), control of the grid being performed only by control of the elementary matrices.

2. Switching grid according to claim 1, characterised in that the coupling circuit comprises logic circuits with OR gates, with several inputs connected to corresponding outputs of the matrices, only one input of each logic gate being active, the others being inactive, the connecting matrices being controlled for this purpose.

3. Switching grid according to claim 2, characterised in that, in order for only one input of each logic gate to be active at a time, the outputs of the same rank j of the different matrices are coupled to the successive inputs of the same logic gate Pⱼ, the output Sⱼ of this gate Pⱼ receiving the signal present at the selected input Eⱼ by validation of the point of intersection of the corresponding matrix connecting this input Eⱼ to the output of the same matrix connected to the corresponding logic gate Pⱼ, the other inputs of the same gate Pⱼ being connected to points of intersection in the other matrices brought to a point of neutral potential.

4. Switching grid according to claim 3, characterised in that one input of each matrix is brought to the point of neutral potential, the inactive inputs of the logic gates being brought to the point of neutral potential by validation of the points of intersection connecting in each matrix the corresponding outputs to this input at neutral potential.

5. Switching grid according to claim 3, characterised in that each matrix comprises a line of neutral potential to which are connected, in the absence of having been selected, the points of intersection of the matrix so that the corresponding outputs are inactive.
